# EUROPÄISCHE PATENTSCHRIFT

(11) **EP 1 069 057 B1**
(45) Veröffentlichungstag und Bekanntmachung des Hinweises auf die Patenterteilung: **11.12.2002**
(21) Anmeldenummer: 00114614.1
(22) Anmeldetag: 07.07.2000
(51) Int. Cl.: B65F 1/14, B65F 1/16, C05F 17/02

(54) **Behälter zur Aufnahme kompostierbarer Materialien**
Receptacle for compostable materials
Récipient pour matières compostables

(30) Priorität: 10.07.1999 DE 19932305
(43) Veröffentlichungstag der Anmeldung: 17.01.2001
(73) Patentinhaber: Paul Craemer GmbH, 33442 Herzebrock-Clarholz (DE)
(72) Erfinder: Brandenburg, Klaus-Dieter, 33442 Herzebrock (DE); Achterberg, Wilhelm-Jan, 3906 N.B. Veenendaal (NL)
(74) Vertreter: Habbel, Hans-Georg, Dipl.-Ing.

(56) Entgegenhaltungen:
- EP-A- 0 501 028
- DE-U- 9 405 953
- US-A- 5 036 999

## Beschreibung

Die Erfindung bezieht sich auf einen Behälter gemäß dem Oberbegriff des Hauptanspruches.

Ein gattungsbildender Behälter ist aus der FR 27 18 435 A bekannt. Dieser bekannte Behälter ist ebenso wie der Behälter, auf den sich die Erfindung bezieht, als ein Standardcontainer für Haushaltsanwendung ausgeführt und dieser Container kann auf übliche Weise durch einen Abfuhrdienst entleert werden, wozu Hausmüllwagen eingesetzt werden, die mit Hebemitteln ausgerüstet sind, die am Oberrand des Containers angreifen können.

Der gattungsbildende Container soll für das Kompostieren von organischem Material, wie Gemüse, Obst und Gartenabfall od. dgl. verwendet werden. Über Luftzufuhr- und Luftabfuhröffnungen kann eine Luftzirkulation bewerkstelligt werden, die für den guten Verlauf des Kompostiervorganges notwendig ist. Eine verschließbare Öffnung im Bereich der Unterseite des Behälters macht es möglich, den Kompost herauszunehmen.

Beim Kompostierprozeß werden erhebliche Mengen an Feuchtigkeit frei. Diese Feuchtigkeit sammelt sich unter dem durchlässigen Rost des Containers und muß von Zeit zu Zeit abgelassen werden, da bei einem hohen Feuchtigkeitsniveau der Kompostiervorgang zum Stillstand kommen würde. In dem gattungsbildenden Container ist deshalb ein Ablaßhahn vorgesehen, über den sodann die Feuchtigkeit abgelassen werden kann.

Aus der DE 44 27 729 ist eine Anschließvorrichtung mit mindestens zwei Anschlüssen bekanntgeworden, die parallel und gleichzeitig an die entsprechenden Anschlüsse eines Biocontainers mit hoher Abdichtungswirkung angeschlossen werden kann. Aus dieser Literaturstelle ist es bekannt, an die Ablaßöffnung eines Biocontainers einen Schlauch anzuschließen, der also anstelle oder zusätzlich zu dem in der gattungsbildenden Literaturstelle beschriebenen Ablaßhahn vorgesehen werden kann. Mit einem solchen Schlauch, der aus hygienischen Gründen ebenfalls mit einem Verschlußorgan versehen sein muß, ist aber nicht kontrollierbar, wie hoch der Wasserstand im Auffangbehälter des Biocontainers ist.

Die Menge Feuchtigkeit, die frei wird, hängt stark von der Menge und der Art des zu kompostierenden Materials und den herrschenden Temperaturen ab. Es ist deshalb nicht immer klar, wann die Feuchtigkeit abgelassen werden muß, und der Benutzer kann das Ablassen der Feuchtigkeit vergessen, so daß der Kompostiervorgang durch die innerhalb des Behälters ansteigende Flüssigkeit unterbrochen wird.

Bei dem gattungsbildenden Behälter ist die Ablaßöffnung für die Feuchtigkeit als Zapfhahn ausgebildet, dessen Lage und damit dessen Betätigung unhandlich ist.

Der vorliegenden Erfindung liegt die Aufgabe zugrunde, den gattungsbildenden Behälter dahingehend zu verbessern, daß der Flüssigkeitsstand im Behälter kontrollierbar ist und das Ablassen der Flüssigkeit erleichtert wird. Dabei trägt vorzugsweise die Ausbildung des Rostes zu einer guten Abführung der sich im unteren Bereich des kompostierbaren Materials befindenden Flüssigkeit bei.

Diese der Erfindung zugrundeliegende Aufgabe wird durch die Lehre des Hauptanspruches gelöst.

Vorteilhafte Ausgestaltungen sind in den Unteransprüchen erläutert.

Mit anderen Worten ausgedrückt wird vorgeschlagen, daß an die aus dem Stand der Technik bekannte Ablaßöffnung nach außen hin ein flexibler Schlauch anschließt, der durchsichtig ist und der außerhalb des Behälters hochführbar und festklemmbar ist. Dieser Schlauch muß natürlich an seinem oberen Ende offen sein, um somit mit dem im unteren Bereich des Behälters befindlichen Flüssigkeitsstand eine kommunizierende Röhre zu schaffen. Vorzugsweise wird dabei an der Seitenwand des Behälters, an der sich der Schlauch befindet, der Behälter mit einem Hohlzapfen ausgerüstet, der von dem oberen Ende des Schlauches übergriffen werden kann, so daß einerseits der Schlauch festgelegt ist, andererseits die Schlauchöffnung nach oben hin offen ist und weiterhin sichergestellt ist, daß selbst dann, wenn der Flüssigkeitsspiegel im Schlauch bis oben hin angestiegen ist, die Flüssigkeit nicht nach außen austreten kann, sondern in den Behälter zurückgeleitet wird. Dies ist lediglich eine Sicherheitsmaßnahme, die ein Verschmutzen der Umgebung des Behälters verhindert, wobei aber der Kompostiervorgang unterbrochen werden würde.

Ein bevorzugtes Merkmal der Erfindung ist darin zu sehen, daß die Unterseite des den Behälter abschließenden Deckels so geneigt bzw. so ausgebildet ist, daß das sich sammelnde Kondenswasser zur Außenseite des Behälters abgeleitet wird. Während in normalen Biotonnen man bestrebt ist, die sich an der Unterseite des Deckels sammelnde Feuchtigkeit in den Behälter und in das sich im Behälter befindliche Material zurückzuführen, wird im vorliegenden Fall angestrebt, die Feuchtigkeit nach außen hin abzuführen, wobei dieses Kondenswasser üblicherweise geruchsfrei ist, so daß ein einfaches Ableiten zur Außenseite des Behälters möglich erscheint.

Der das kompostierbare Material innerhalb des Behälters stützende Rost wird gemäß der Erfindung vorzugsweise aus Metall ausgebildet und eine Metallplatte kommt zum Einsatz, die mit Durchlauföffnungen versehen ist, an die sich nach unten ein Ringflansch jeweils anschließt, d. h. diese Durchlauföffnungen werden von oben nach unten ausgestanzt und die Materialmenge wird zu einem Ringflansch umgeformt. Es hat sich herausgestellt, daß bei einer solchen Anordnung das Ableiten der Flüssigkeit wesentlich besser erfolgt als wenn die Metallplatte lediglich mit einfachen Durchlauföffnungen versehen ist. Der Rost ist vorzugsweise profiliert ausgebildet und stützt sich auf am Behälterboden angeordneten Stützen ab und weiterhin vorzugsweise auf aus der Wandung des Behälters ausgeformten Schultern und ist entweder auf den Schultern und/oder auf den Stützen über entsprechende Hilfsmittel festgelegt, so daß beim Auskippen des Behälters, beispielsweise in ein Müllfahrzeug, der Rost lagegesichert im Behälter angeordnet ist.

Die aus dem Stand der Technik bekannten, in der unteren Wand des Behälters angeordneten Belüftungsöffnungen werden vorzugsweise bei der erfindungsgemäßen Einrichtung als Belüftungsrohre ausgebildet, die den Behälter durchqueren, wobei diese Rohre mit Luftdurchtrittsöffnungen versehen sind, wodurch es möglich ist, über die ganze untere Seite des Behälters eine ausreichende Luftzufuhr sicherzustellen. Diese Rohre können aus Metall oder auch aus Kunststoff bestehen.

Die vorzugsweise in der Rückwand des Behälters vorgesehene Entnahmeöffnung wird durch einen Schieber verschlossen, der nach oben hin angehoben werden kann, so daß die Entnahmeöffnung freigegeben wird. Ein solcher Schieber hat gegenüber einer üblichen Klappe den Vorteil, daß Gelenke vermieden werden und daß ein nur partielles Öffnen der eigentlichen Entnahmeöffnung je nach der Fließfähigkeit des gebildeten Kompostes eingestellt werden kann.

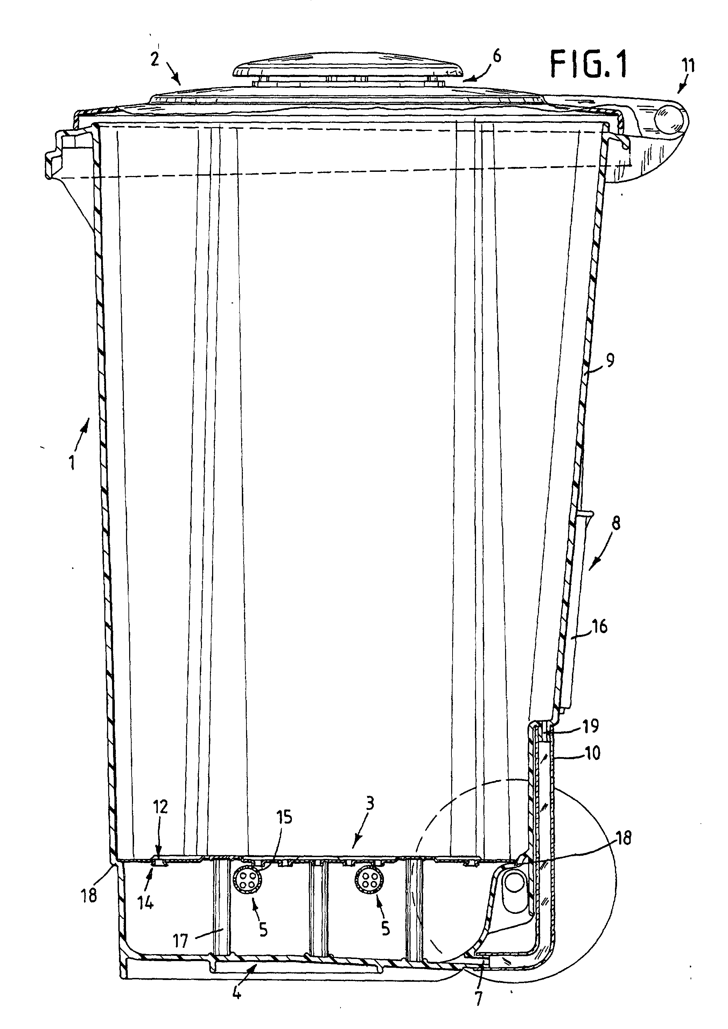

Ein Ausführungsbeispiel der Erfindung wird nachfolgend anhand der Zeichnungen erläutert. Die Zeichnungen zeigen dabei in
- Fig. 1: einen Behälter im Schnitt gemäß der Linie 1 - 1 in Fig. 2 und in
- Fig. 2: eine Draufsicht in den Behälter bei abgenommenem Behälterdeckel.

In den Zeichnungen ist ein Behälter 1 dargestellt, der einen Deckel 2 sowie einen Rost 3 im unteren Bereich aufweist, wobei nach unten hin der Behälter durch den Behälterboden 4 abgeschlossen ist. In an sich bekannter Weise ist der Behälter aus einem formbaren Werkstoff, beispielsweise Kunststoff, hergestellt. Im unteren Bereich des Behälters sind Belüftungsöffnungen 5 und Belüftungsrohre 15 angedeutet, wobei eine Vielzahl solcher Belüftungsöffnungen vorgesehen sein kann, die unterhalb des Rostes 3 vorgesehen werden. Zusätzlich könnte auch oberhalb des Rostes im unteren Bereich des Behälters Belüftungsöffnungen vorgesehen sein. Im Deckel ist eine entsprechende Belüftungsöffnung 6 ausgebildet, so daß die erforderliche und gewünschte Luftzirkulation erreichbar ist. Der Behälterboden 4 ist mit einer Ablaßöffnung 7 ausgerüstet, wobei der Behälterboden, wie aus der Zeichnung erkennbar, so gestaltet ist, daß die sich sammelnde Flüssigkeit zu dieser Ablaßöffnung 7 hin geführt ist. In der Zeichnung ist die Neigung des Behälterbodens 4 erkennbar, die von der Vorderwand des Behälters zur Rückseite führt, wobei weiterhin der Behälterboden auch dachförmig gestaltet sein kann, so daß auch von den Seitenwänden her die Flüssigkeit zur Ablaßöffnung 7 geführt wird, wobei die Ablaßöffnung 7 nicht im mittleren Teil des Behälterbodens 4 ausgebildet sein kann, sondern beispielsweise im Bereich einer Seitenwand, so daß dadurch nur eine Querneigung des Behälterbodens erforderlich ist. Die Rückseite des Behälters ist als Seitenwand 9 bezeichnet und weist eine Entnahmeöffnung 8 auf, die durch einen Schieber 16 verschließbar ist, der nach oben hin verschoben werden kann, so daß dadurch ein partielles Öffnen der großen Entnahmeöffnung 8 möglich wird. An die Ablaßöffnung 7, die als Rohrzapfen gestaltet ist, schließt sich ein durchsichtiger Schlauch 10 an, der an der Seitenwand 9 nach oben geführt zu einem Hohlzapfen 19 führt, der aus einem Schulterrücksprung der Seitenwand 9 ausgeformt ist. Die Schlauchmündung kann auf diesen Hohlzapfen 19 aufgeschoben werden und wird dadurch festgelegt, ist aber lufttechnisch offen, so daß ein kommunizierendes Röhrensystem mit dem Bereich des Behälterbodens unterhalb des Rostes 3 erreicht wird.

Im unteren Bereich des Behälters 1 sind Schultern 18 ausgeformt, auf die sich der Rost 3 auflegt, wobei der Rost weiterhin durch Stützen 17 abgestützt wird, die sich andererseits auf dem Behälterboden 4 abstützen. Der Rost 3 kann dabei sowohl auf den Schultern 18 wie auch auf den Stützen 17 befestigt werden, wobei auch die Stützen 17 am Behälterboden festlegbar sind, so daß ein lagesicheres Festlegen des Rostes 3 erreicht wird, unabhängig in welcher Stellung sich der Behälter 1 befindet. An der oberen Rückseite des Behälters ist ein Handgriff 11 angeordnet und die Innenseite des Deckels ist so geneigt, daß sichergestellt ist, daß sich das an der Unterseite des Deckels sammelnde Kondenswasser zur Rückseite ab- und nach außen hingeführt wird.

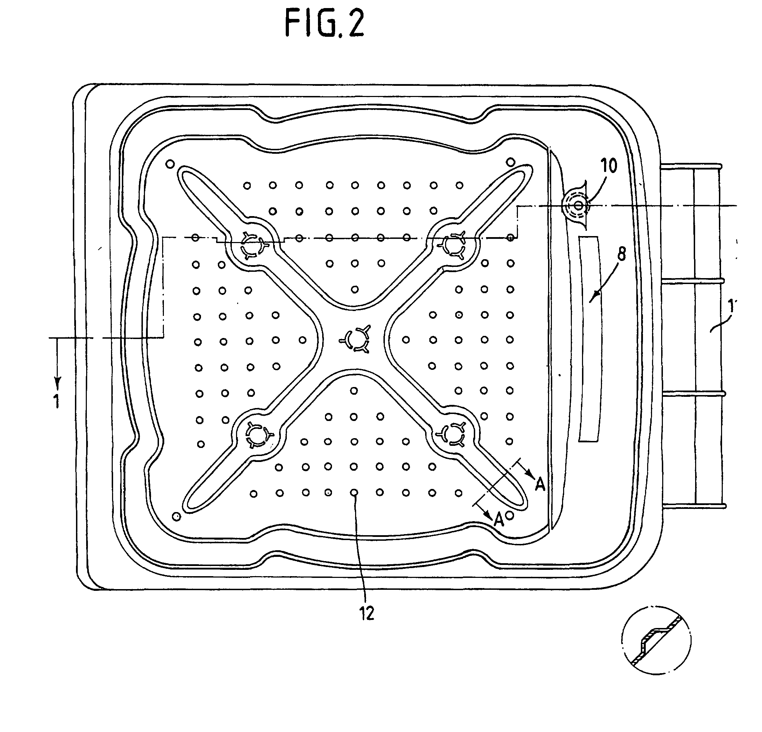

In dem in seiner Gestaltung deutlicher aus Fig. 2 erkennbaren Rost 3 sind Durchlauföffnungen 12 vorgesehen, die nach unten hin in einen Ringflansch 14 münden, der entweder - wie im mittleren Teil des Rostes als Ausführungsbeispiel dargestellt - geradlinig, also zylindrisch sind oder - wie bei den beiden äußeren Durchlauföffnungen 12 dargestellt - sich wieder nach unten hin verbreitern. Diese Art der Ausbildung der Durchlauföffnung verbessert die Abführung des sich auf dem Rost sammelnden Wassers.

Der Rost ist - wie dies Fig. 2 zeigt - profiliert ausgebildet, um damit die erforderliche Tragfähigkeit aufzuweisen, wobei in der Einzeldarstellung in Fig. 2, die einen Schnitt durch den Rost gemäß der Linie A - A in Fig. 2 darstellt, nach oben hin gewölbt ist, so daß ein gutes Ableiten des sich auf den Profilierungen sammelnden Wassers zur Seite hin erreichbar ist.

Zusammenfassend ist festzustellen, daß immer eine zuverlässige Messung des Flüssigkeitsniveaus im Behälter möglich ist. Der Druck im Schlauch 10 entspricht immer dem Druck im Behälter 1, so daß eine ungestörte Funktion auf Basis des Prinzips der kommunizierenden Röhren erreicht wird. Durch die Rückleitung der Flüssigkeit in den Behälter dann, wenn die Flüssigkeit durch die Ablaßöffnung 7 und den Schlauch 10 nicht rechtzeitig erfolgt, kommt das kompostierbare Material im unteren Bereich mit der Flüssigkeit in Berührung, wodurch der Kompostierungsprozeß zum Stillstand kommt. Vor allem beim privaten Einsatz des Behälters 1 ist dem jedoch bei weitem dem Auslecken der Flüssigkeit den Vorzug zu geben. In einem solchen Fall kann der Behälter einfach zum Entleeren angeboten werden, wobei dann nach Füllen des Behälters 1 und wieder in Gang bringen des Kompostierungsprozesses die Arbeit wieder aufgenommen werden kann.

Wie aus der Zeichnung erkennbar, ist der Behälterkörper so ausgebildet, daß durch Formgebung die ausreichende Festigkeit des Behälters erzielt wird, andererseits ein gutes Ausleeren des Behälters im Falle der Entleerung durch Müllfahrzeuge sichergestellt ist.

Da die sich im Behälter im unteren Bereich sammelnde Flüssigkeit auch als Dünger genutzt werden kann (im Gegensatz zu dem sich an der Unterseite des Behälterdeckels sammelnden Kondenswassers), kann weiterhin vorgesehen sein, daß an den Schlauch, d. h. an die Schlauchmündung eine Saugpumpe od. dgl. anschließbar ist, so daß das Wasser gezielt im Garten zur Düngung eingesetzt werden kann.

## Patentansprüche

1. Behälter (1) zur Aufnahme kompostierbarer Materialien mit an der Oberseite vorgesehenem Deckel (2), einem im Abstand vom Behälterboden (4) vorgesehenen Rost (3), Belüftungsöffnungen (5, 6) im unteren und oberen Bereich des Behälters (1) sowie einer Ablaßöffnung (7) für die sich sammelnde Flüssigkeit im unteren Bereich des Behälters (1) sowie einer verschließbaren Entnahmeöffnung (8) in Höhe des Rostes (3) in einer Seitenwand (9) des Behälters (1), **dadurch gekennzeichnet, daß** an die Ablaßöffnung (7) nach außen hin ein flexibler Schlauch (10) anschließt, der außerhalb des Behälters (1) hochführbar und festklemmbar ist und aus durchsichtigem Werkstoff besteht.

2. Behälter nach Anspruch 1, **dadurch gekennzeichnet, daß** der Schlauch (10) an der Seitenwand (9) angeordnet ist, an die sich im oberen Bereich ein Handgriff (11) zur Handhabe des Behälters befindet.

3. Behälter nach Anspruch 1 oder 2, **dadurch gekennzeichnet, daß** der nach außen hin außerhalb des Behälters hochführbare Schlauch mit seinem offenen Schlauchende einen in der Behälteraußenwand ausgeformten Hohlzapfen (19) übergreift und hierdurch festgelegt ist.

4. Behälter nach einem der vorhergehenden Ansprüche, **dadurch gekennzeichnet, daß** der Behälterboden (4) zur Ablaßöffnung (7) hin geneigt ist.

5. Behälter nach einem der vorhergehenden Ansprüche, **dadurch gekennzeichnet, daß** der Rost (3) aus Metall besteht.

6. Behälter nach Anspruch 5, **dadurch gekennzeichnet, daß** die im Rost (3) vorgesehenen Durchlauföffnungen (12) einen sich nach unten erstreckenden Ringflansch (14) aufweisen.

7. Behälter nach Anspruch 5 oder 6, **dadurch gekennzeichnet, daß** der Rost (3) profiliert ausgebildet ist.

8. Behälter nach einem der vorhergehenden Ansprüche 5 bis 7, **dadurch gekennzeichnet, daß** sich der Rost auf Stützen (17) abstützt, die sich am Behälterboden (4) abstützen.

9. Behälter nach einem der vorhergehenden Ansprüche 5 bis 8, **dadurch gekennzeichnet, daß** der Rost (3) auf im Randbereich des Behälters (1) vorgesehenen, ausgeformten Schultern (18) aufliegt.

10. Behälter nach Anspruch 8 oder 9, **dadurch gekennzeichnet, daß** der Rost (3) auf den Schultern (18) und/oder den Stützen (17) gegen Bewegungen nach oben festgelegt ist.

11. Behälter nach einem der vorhergehenden Ansprüche, **gekennzeichnet durch** sich über die Breite des Behälters (1) unterhalb des Rostes (3) erstreckende Belüftungsrohre (15).

12. Behälter nach einem der vorhergehenden Ansprüche, **dadurch gekennzeichnet, daß** die die Entnahmeöffnung (8) verschließende Verschlußvorrichtung als in der Höhe verstellbarer Schieber (16) ausgebildet ist.

13. Behälter nach einem der vorhergehenden Ansprüche, **dadurch gekennzeichnet, daß** an den sich an die Ablaßöffnung (7) anschließenden Schlauch (10) eine Saugpumpe anschließbar ist.

14. Behälter nach einem der vorhergehenden Ansprüche, **dadurch gekennzeichnet, daß** die Unterseite des Deckels (2) so geneigt ist und so ausgebildet ist, daß das sich sammelnde Kondenswasser zur Außenseite des Behälters (1) abgeleitet wird.

15. Behälter nach Anspruch 14, **dadurch gekennzeichnet, daß** die Ableitung des sich unter dem Deckel (2) sammelnden Wassers zur Rückseite des Behälters (1) erfolgt.

## Claims

1. A receptacle (1) for receiving compostable materials, comprising a cover (2) which is provided on its upper surface, a grid (3) which is provided at a distance from the receptacle base (4) and aeration openings (5, 6) in the lower and upper regions of the receptacle (1), and also comprising a discharge opening (7) for the liquid which accumulates in the lower region of the receptacle (1) as well as a closable removal opening (8) at the height of the grid (3) in a sidewall (9) of the receptacle (1), **characterised in that** a flexible tube (10) outwardly adjoins the discharge opening (7), which tube can be led upwards and clamped outside the receptacle (1) and which consists of a transparent material.

2. A receptacle according to claim 1, **characterised in that** the tube (10) is disposed on the sidewall (9) on the upper region of which there is a handle (11) for manipulating the receptacle.

3. A receptacle according to claims 1 or 2, **characterised in that** the open tube end of the tube which can be led upwards outside the receptacle fits over a hollow spigot (19) formed in the receptacle outer wall and is thereby fixed.

4. A receptacle according to any one of the preceding claims, **characterised in that** the receptacle base (4) is inclined towards the discharge opening (7).

5. A receptacle according to any one of the preceding claims, **characterised in that** the grid (3) consists of metal.

6. A receptacle according to claim 5, **characterised in that** the passageway openings (12) which are provided in the grid (3) comprise downwardly extending annular flanges (14).

7. A receptacle according to claims 5 or 6, **characterised in that** the grid (3) is of profiled construction.

8. A receptacle according to any one of the preceding claims 5 to 7, **characterised in that** the grid is supported on stays (17) which are supported on the receptacle base (4).

9. A receptacle according to any one of the preceding claims 5 to 8, **characterised in that** the grid (3) rests on moulded shoulders (18) which are provided in the edge region of the receptacle (1).

10. A receptacle according to claims 8 or 9, **characterised in that** the grid (3) is fixed on the shoulders (18) and/or on the stays (17) to prevent it from executing upward movements.

11. A receptacle according to any one of the preceding claims, **characterised by** aeration tubes (15) which extend over the width of the receptacle (1) underneath the grid (3).

12. A receptacle according to any one of the preceding claims, **characterised in that** the closure device which closes the removal opening (8) is constructed as a height-adjustable sliding gate (16).

13. A receptacle according to any one of the preceding claims, **characterised in that** a suction pump can be connected to the tube (10) which adjoins the discharge opening (7).

14. A receptacle according to any one of the preceding claims, **characterised in that** the underside of the cover (2) is inclined and constructed so that water of condensation which accumulates is drained off towards the outside of the receptacle (1).

15. A receptacle according to claim 14, **characterised in that** drainage of the water which accumulates under the cover (2) occurs towards the back of the receptacle (1).

## Revendications

1. Récipient (1) destiné à recevoir des matières compostables, avec un couvercle (2) prévu sur la face supérieure, une grille (3) prévue à distance du fond (4) du récipient, des ouvertures d'aération (5, 6) dans les parties inférieure et supérieure du récipient (1), ainsi qu'une ouverture d'évacuation (7) pour le liquide accumulé dans la partie inférieure du récipient (1) et une ouverture de prélèvement (8) à possibilité de fermeture à hauteur de la grille (3) dans une paroi latérale (9) du récipient (1), **caractérisé en ce qu'**un tuyau flexible (10), pouvant être guidé vers le haut et fixé par serrage à l'extérieur du récipient (1) et composé d'un matériau transparent, se raccorde à l'extérieur sur l'ouverture d'évacuation (7).

2. Récipient selon la revendication 1, **caractérisé en ce que** le tuyau (10) est disposé sur la paroi latérale (9), qui porte dans sa partie supérieure une poignée (11) pour la manipulation du récipient.

3. Récipient selon la revendication 1 ou 2, **caractérisé en ce que** le tuyau pouvant être remonté à l'extérieur du récipient recouvre par son extrémité ouverte un goujon de bois (19) formé dans la paroi extérieure du récipient et est ainsi fixé.

4. Récipient selon l'une ou l'ensemble des revendications précédentes, **caractérisé en ce que** le fond (4) du récipient est incliné en direction de l'ouverture d'évacuation (7).

5. Récipient selon l'une ou l'ensemble des revendications. précédentes, **caractérisé en ce que** la grille (3) est composée de métal.

6. Récipient selon la revendication 5, **caractérisé en ce que** les ouvertures d'écoulement (12) prévues dans la grille (3) présentent une bride annulaire (14) qui s'étend vers le bas.

7. Récipient selon la revendication 5 ou 6, **caractérisé en ce que** la grille (3) est profilée.

8. Récipient selon l'une ou l'ensemble des revendications 5 à 7, **caractérisé en ce que** la grille s'appuie sur des supports (17) qui s'appuient sur le fond (4) du récipient.

9. Récipient selon l'une ou l'ensemble des revendications 5 à 8, **caractérisé en ce que** la grille (3) repose sur des épaulements (18) mis en forme et prévus dans la partie de bord du récipient (1).

10. Récipient selon la revendication 8 ou 9, **caractérisé en ce que** la grille (3) est fixée vers le haut sur les épaulements (18) et/ou les supports (17) afin d'empêcher son déplacement.

11. Récipient selon l'une ou l'ensemble des revendications précédentes, **caractérisé en ce qu'**il comporte des tuyaux d'aération (15) qui s'étendent sur la largeur du récipient (1) en-dessous de la grille (3).

12. Récipient selon l'une ou l'ensemble des revendications précédentes, **caractérisé en ce que** le dispositif de fermeture qui ferme l'ouverture de prélèvement (8) est conçu comme un tiroir (16) réglable en hauteur.

13. Récipient selon l'une ou l'ensemble des revendications précédentes, **caractérisé en ce qu'**une pompe d'aspiration peut être raccordée au tuyau (10) relié à l'ouverture d'évacuation (7).

14. Récipient selon l'une ou l'ensemble des revendications précédentes, **caractérisé en ce que** la face inférieure du couvercle (2) est inclinée et conformée de telle sorte que l'eau de condensation qui s'accumule soit déviée vers l'extérieur du récipient (1).

15. Récipient selon la revendication 14, **caractérisé en ce que** l'évacuation de l'eau qui s'accumule sous le couvercle (2) se fait vers l'arrière du récipient (1).
